# EUROPÄISCHE PATENTSCHRIFT

(11) **EP 0 603 637 B1**
(45) Veröffentlichungstag und Bekanntmachung des Hinweises auf die Patenterteilung: **21.04.1999**
(21) Anmeldenummer: 93119736.2
(22) Anmeldetag: 08.12.1993
(51) Int. Cl.: B01D 53/26

(54) **Sorptionsmittel-Patrone**
Sorption agent cartridge
Cartouche avec agent de sorption

(30) Priorität: 23.12.1992 DE 4243816
(43) Veröffentlichungstag der Anmeldung: 29.06.1994
(73) Patentinhaber: ZEO-TECH Zeolith Technologie GmbH, D-85716 Unterschleissheim (DE)
(72) Erfinder: Maier-Laxhuber, Peter, Dr., D-85716 Unterschleissheim (DE); Engelhardt, Reiner, D-80933 München (DE); Becky, Andreas, D-81379 München (DE); Heggl, Gerald, D-82266 Inning (DE)

(56) Entgegenhaltungen:
- EP-A- 0 381 944
- DE-A- 2 854 710
- DE-A- 3 412 173
- GB-A- 971 230
- US-A- 4 534 947
- US-A- 5 147 419

## Beschreibung

Die Erfindung betrifft ein Verfahren und eine Patrone mit einer Sorptionsmittelfüllung für die Sorption von Wasserdampf.

Mit Sorptionsmittel gefüllte Patronen zur Trocknung von Luft sind beispielsweise aus der DE-A-2854710 und der EP-A-0381944 bekannt. Die GB-A-971230 beschreibt eine hermetisch geschlossene Trocknungspatrone zur Entfeuchtung eines Gasstromes. Alle Patronen werden dazu benutzt, einen Luft- bzw. Gasstrom beim Durchtritt durch die Patrone zu trocknen. Der Luft- bzw. Gasstrom tritt dabei feucht ein und trocken wieder aus.

In der Sorptions-Kältetechnik unterscheidet man zwischen Absorption und Adsorption. Letztere findet beispielsweise bei festen Adsorptionsstoffen statt. Bekannte Adsorptions-Apparate arbeiten als geschlossene oder offene Systeme. In beiden Systemen wird vom Adsorptionsmittel das Arbeitsmittel exotherm sorbiert. Das sorbierte Arbeitsmittel kommt dabei aus einer Dampfquelle, die sich durch die Verdampfung abkühlt. Da beide Systemvarianten während der Sorptionsphase unter Luftabschluß arbeiten, ist der Systemdruck durch den jeweiligen Verdampfungsdruck des Arbeitsmittels gegeben.

Geschlossene Systeme bleiben auch während der nachfolgenden Desorption unter Luftabschluß. Halboffene Systeme werden hingegen unter Luftzutritt desorbiert.

Bekannte Apparate nutzen diese Sorptionstechniken zur Erzeugung von Kälte und/ oder Wärme. Hierbei ist in einem Sorptionsbehälter eine Sorptionsmittelfüllung enthalten, welche mit der Dampfquelle in Verbindung steht. Zwischen Sorptionsmittelfüllung und Dampfquelle befindet sich ein Ventil, welches im geschlossenen Zustand die Sorptionsreaktion verhindert. Beim Öffnen des Ventiles strömt Arbeitsmitteldampf in die Sorptionsmittelfüllung, sofern ein ausreichendes Vakuum vorhanden ist. Ist dies nicht der Fall, verhindert die eingedrungene Luft eine schnelle Sorptionsreaktion.

Geschlossene Systeme sind, da sie ein permanentes Vakuum erfordern, unflexibel. Da die Sorptionsmittelfüllung und die Dampfquelle fest miteinander verbunden sein müssen und deshalb nicht auswechselbar sind, erlauben geschlossene Apparaturen immer nur eine oder eine geringe Anzahl von Anwendungsmöglichkeiten. Halboffene Systeme sind im Gegensatz hierzu weitaus flexibler, da ein einfacher Austausch von Dampfquelle und Sorptionsmittelbehälter möglich ist.

Aufgabe der vorliegenden Erfindung ist es, ein Verfahren anzugeben und einen Sorptonsmittel-Behälter so zu gestalten, daß er einfach aufgebaut ist und eine schnelle Auswechslung in Sorptionssystemen erlaubt.

Gelöst wird diese Aufgabe durch die kennzeichnenden Teile der Ansprüche 1 bzw. 3. Der Sorptionsmittel-Behälter besteht aus einer Sorptionsmittel-Patrone, bei der eine luftdichte Patronenhülle eine Sorptionsmittelfüllung umschließt. Die Hülle hat eine Eingangsöffnung für den Zutritt von Arbeitsmitteldampf und eine Absaugöffnung zum Absaugen von Luft und nichtsorbierter Gase. Eintrittsöffnung und Absaugöffnung müssen dabei bzgl. der Sorptionsmittelfüllung so angeordnet sein, daß der Arbeitsmitteldampf ungehindert von der Sorptionsmittelfüllung sorbiert werden kann.

Die Absaugöffnung befindet sich deshalb erfindungsgemäß auf der der Eintrittsöffnung gegenüberliegenden Seite der Sorptionsmittel-Patrone. Luft und nichtsorbierte Gase können hier aus der Sorptionsmittelfüllung abgesaugt werden, ohne daß nachströmender Arbeitsmitteldampf mit abgesaugt wird. Der einströmende Dampf wird zuerst von den der Eintrittsöffnung nächstliegenden Sorptionsmittelbereichen sorbiert. Erst wenn diese von Arbeitsmitteldampf gesättigt sind, werden weiter entfernt liegende Schichten von der Arbeitsmitteldampf-Strömung erreicht. Dieses zonenartige Weiterströmen des Arbeitsmitteldampfes kann jedoch nur dann gewährleistet werden, wenn Luft und nichtsorbierte Gase über die Absaugöffnung abgezogen werden. Erst wenn nahezu die gesamte Sorptionsmittelfüllung mit dem Arbeitsmittel beladen ist, erfolgt ein sog. Durchbruch der Arbeitsmitteldampf-Strömung durch die Füllung. Von diesem Zeitpunkt an wird auch Arbeitsmitteldampf durch die Absaugöffnung abgesaugt. Würde die Absaugöffnung in der Nähe der Eintrittsöffnung liegen, so würde schon zu Beginn nur Arbeitsmitteldampf abgesaugt werden und nicht die in entfernteren Sorptionsmittelbereichen befindliche Luft.

Um die Saugleistung und die Betriebszeit einer Absaugvorrichtung so klein wie möglich zu halten, wird erfindungsgemäß ein Sorptionsstoff benutzt, welcher Wasserdampf und nicht bzw. nur in geringem Umfang Luft-Moleküle sorbiert. Würde ein Sorptionsstoff benutzt, welcher neben Wasserdampf auch Stickstoff- und Sauerstoff-Moleküle adsorbieren kann, so würde beim Lagern der Sorptionsmittel-Patrone Luft voradsorbiert werden. Wasserdampf würde die vorsorbierten Gase dann desorbieren, da Wassermoleküle eine stärkere Adsorptionskraft im Zeolith-Käfig besitzen. Diese dann während der eigentlichen Sorptions-Reaktion wieder freigesetzten Gase, müßten permanent abgesaugt werden.

Erfindungsgemäß wird die Sorptionsmittel-Patrone mit einem Zeolith vom 3-A-Typ gefüllt. Dieser Typ hat die Eigenschaft, selektiv nur Wassermoleküle aufzunehmen und keine oder nur wenig Luftbestandteile zu sorbieren. Beim Gebrauch der Sorptionsmittel-Patrone muß deshalb nur die Luft zwischen den Sorptionsmittel-Kristallen abgesaugt werden. Ein Absaugen von desorbierten Luftbestandteilen ist nicht notwendig. Damit kann die Sorptionsmittel-Patrone erfindungsgemäß auch in Systemen eingesetzt werden, die mit Hilfe einer handbetriebenen Vakuumpumpe evakuiert werden.

Die Sorptionsmittelfüllung besteht erfindungsgemäß aus Granalien, die in Kugel- oder Stäbchen-Form kommerziell erhältlich sind. Der Granalien-Durchmesser sollte dabei nicht kleiner als 1 mm sein, da bei kleinerem Durchmesser der Druckabfall des einströmenden Arbeitsmitteldampfes eine rasche Sorption verhindert.

Bei Füllungen aus Sorptionsmittel-Granulat ist es notwendig, das Granulat in der Patrone durch ein Sieb zu fixieren. Der Arbeitsmitteldampf strömt durch das Sieb hinein, während das Granulat am Herausfallen gehindert wird. Vorteilhaft ist es, wenn das Sieb von der Patronen-Hülle lösbar ist, um die Sorptionsmittelfüllung z. B. zum Regenerieren auswechseln zu können.

Besonders vorteilhaft haben sich auch kompakte, feste Formkörper erwiesen, die in pastöser Form in die Patronenhülle eingebracht werden und beim ersten Trocknungsvorgang fest werden. Um eine ausreichende Sorptionsgeschwindigkeit zu erreichen, ist es notwendig, diese festen Füllkörper mit geeigneten Strömungskanälen zu versehen. Vorteilhafterweise ist die Richtung dieser Strömungskanäle von der Eintrittsöffnung hin zur Absaugöffnung gerichtet. Strömungsquerschnitte und Zahl der Strömungskanäle richten sich dabei nach den Erfordernissen des Sorptionssystems.

Vorteilhaft ist es, der Sorptionsmittelfüllung Mittel beizumischen, die beispielsweise eine optische Anzeige des Beladungszustandes erlauben. Wenn diese Mittel in der Nähe des Absauganschlusses untergebracht sind, kann bei Auftreten eines Farbumschlages ein Patronenwechsel durchgeführt werden. Besonders vorteilhaft haben sich auch Sensoren erwiesen, welche den Beladungszustand auf elektronischem Weg (z. B. durch Kapazitätsänderung) signalisieren. Dies ist besonders bei automatisch arbeitenden Sorptionssystemen von Vorteil.

Sobald die Sorptionsmittelfüllung gesättigt ist, muß sie durch eine regenerierte ersetzt werden. Die gesättigte Patrone wird dann entweder mit einer neuen Zeolith-Füllung versehen oder aber durch Erhitzen regeneriert. In einfachen Fallen genügt es, die Sorptionsmittel-Patrone, die ja nur aus Sorptionsmittel und metallischer Hülle besteht, in einem Wärmeschrank so lange zu erhitzen, bis alle Sorptionsmittel-Bereiche Temperaturen über 200 °C erreicht haben. Für bestimmte Sorptionsmittel-Typen kann diese Temperatur aber auch bei über 300 °C liegen.

Beim Erhitzen der Sorptionsmittel-Patronen wird der zuvor sorbierte Arbeitsmitteldampf in die Luft abgegeben. Arbeitsmittel wie etwa Ammoniak oder Alkohol sind dafür nicht geeignet.

Vorteilhaft ist es insbesondere bei größeren Patronen, eine elektrische Heizung innerhalb der Sorptionsmittelfüllung fest zu installieren. Bei dieser Lösung empfiehlt es sich jedoch, die Heizung mit einem elektrischen Thermostat zu versehen, der eine Überhitzung der Sorptionsmittelfüllung verhindert.

Beim Wechseln einer Sorptionsmittel-Patrone aus einem Sorptionssystem müssen zwei Verbindungen geöffnet werden. Zum einen die Eintrittsöffnung von der Dampfquelle und zum anderen die Absaugöffnung zu der Absaugvorrichtung. Erfindungsgemäß können diese beiden Öffnungen auch durch nur einen einzigen Anschluß gekoppelt werden. Da die Absaugöffnung in der Regel deutlich kleiner ist als die Eintrittsöffnung, ist es von Vorteil, wenn die Absaugöffnung durch die Öffnung der Eintrittsöffnung hindurchgeführt ist. Dies kann auf zweierlei Weise geschehen. In der ersten Variante wird ein Saugrohr so in der Sorptonsmittelfüllung fixiert, daß ein Ende am gegenüberliegenden Bereich der Sorptionsmittelfüllung mündet, wo erfindungsgemäß die nichtsorbierten Gase abgesaugt werden müssen. In der zweiten Variante ist das Absaugrohr nicht fest mit der Patrone verbunden, sondern verbleibt beim Wechsel der Patrone an einem Anschlußadapter, der die Eintrittsöffnung mit der Dampfquelle verbindet. In der Sorptionsmittelfüllung ist deshalb ein Kanal für das Absaugrohr vorgesehen. Da bei beiden Varianten nur noch eine Verbindung gelöst werden muß, ist ein schneller Patronenwechsel möglich. Ein weiterer Vorteil besteht darin, daß nur noch die Eintrittsöffnung vakuumdicht ausgeführt werden muß.

Als Sorptionsmittel-Patronen eignen sich damit alle flaschenartigen Behältnisse, welche einen ausreichend großen Öffnungsquerschnitt besitzen. Geeignete Anschlußadapter sind beispielsweise von Getränkesystemen bekannt (Keg-Verschlüsse bei Getränke-Fässern). Hier erfolgt über einen einzigen Adapter sowohl die CO₂-Versorgung als auch die Faßentleerung.

Alle Dichtungen zum Anschluß der Sorptionsmittel-Patrone an das restliche Sorptionssystem sind fest mit dem Adapter verbunden. Die Sorptionsmittel-Patrone besteht somit im wesentlichen nur aus einer Hülle und der Sorptionsmittelfüllung. Sie ist damit auch als Wechsel-Patrone kostengünstig herzustellen und als ganzes im Wärmeschrank (z. B. Backofen) regenerierbar.

Bei Sorptionsmittel-Patronen mit hoher Sorptionsleistung ist es von Vorteil, zusätzliche Wärmetauscher zur Kühlung des Sorptionsmittels vorzusehen. Diese Wärmetauscher können beispielsweise Wärmeleitbleche im Außenbereich der Patronen-Hülle sein oder aber Rohrleitungen für wärmeaufnehmende Medien innerhalb der Sorptionsmittelfüllung. Als wärmeaufnehmende Medien eignen sich insbesondere Flüssigkeiten wie Wasser oder zu erwärmende Getränke.

In der Zeichnung sind erfindungsgemäße Ausführungsformen der Sorptionsmittel-Patrone dargestellt. Es zeigt:
Fig. 1 eine Sorptionsmittel-Patrone, bei der die Absaugöffnung durch die Eintrittsöffnung geführt ist, und
Fig. 2 eine Sorptionsmittel-Patrone mit einem Tauchrohr

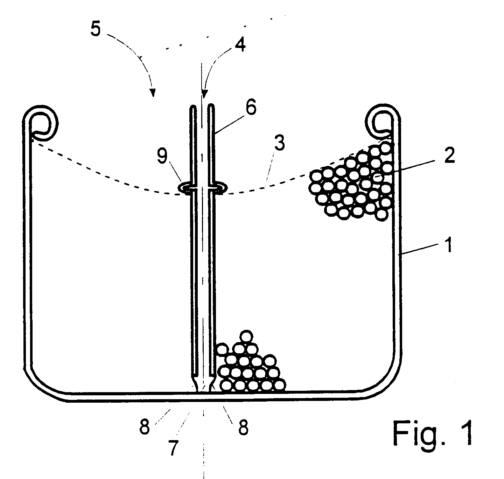

Gem. Fig. 1 enthält eine metallische Patronenhülle (1) eine (nur teilweise gezeichnete) Sorptionsmittelfüllung (2). Diese ist über ein Sieb (3) in der Patronenhülle (1) fixiert. Eine Absaugöffnung (4) ragt durch eine Eintrittsöffnung (5), welche durch eine Öffnung der Patronenhülle (1) gebildet ist. Die Absaugöffnung (4) wird durch das eine Ende des Saugrohrs (6) gebildet, welches mit seinem anderen Ende (7) mit der Patronenhülle (1) verschweißt ist. Am Saugrohrende (7) sind Öffnungen (8) vorgesehen, durch welche Luft und nichtsorbierte Gase aus der Sorptionsmittelfüllung (2) abgesaugt werden können. Durch eine Wulst (9) am Saugrohr (6) ist das Sieb (3) zusätzlich stabilisiert.

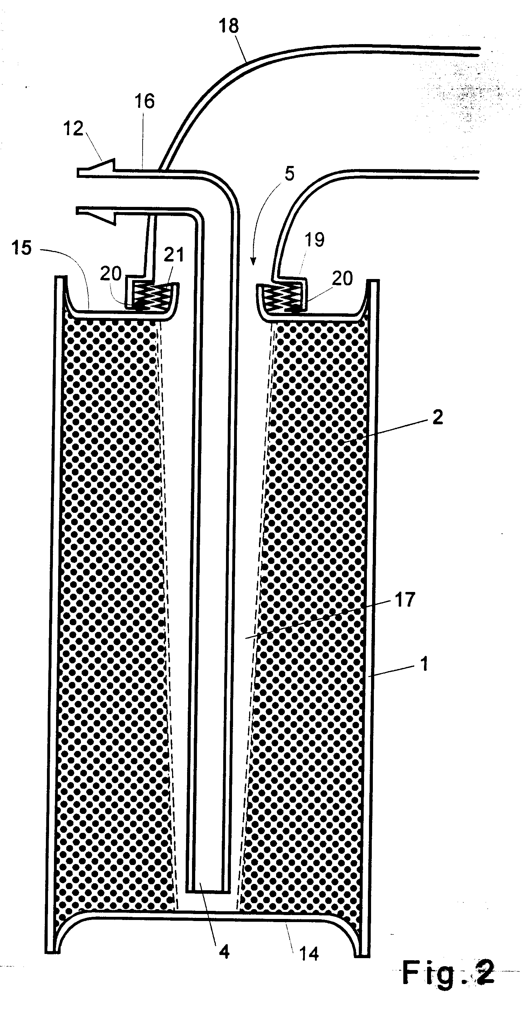

Auch Fig. 2 zeigt, wie schon Fig. 1 eine Sorptionsmittel-Patrone in geschnittener Darstellung. In eine zylindrische Patronenhülle (1) ist auf den Stirnseiten ein Boden (14) und ein Deckel (15) eingeschweißt. Im Deckel (15) befindet sich die Eintrittsöffnung (5), durch welche ein Saugrohr (16) in die Sorptionsmittelfüllung (2) hineinragt. Das innenliegende Ende des Saugrohres (16) mündet am Boden der Sorptionsmittel-Patrone innerhalb eines inneren Strömungskanals (17). Das äußere Ende des Saugrohres (16) enthält ebenfalls eine Vorrichtung (12) zum Anschluß einer Absaugvorrichtung. Die Eintrittsöffnung (5) ist mit einem Gewinde (21) ausgerüstet, mit welchem die gesamte Sorptionsmittel-Patrone an eine Arbeitsmitteldampf-Leitung (18) anschraubbar ist. Diese Arbeitsmitteldampf-Leitung (18) leitet Arbeitsmitteldampf aus einer nicht gezeichneten Arbeitsmitteldampfquelle zur Sorptionsmittel-Patrone. Das Gegengewinde (19) am Ende der Arbeitsmittel-Leitung (18) ist mit einer O-Ringdichtung (20) versehen, welche die Sorptionsmittel-Patrone vakuumdicht an den Arbeitsmitteldampfkanal (18) ankoppeln läßt.

## Patentansprüche

1. Verfahren zur Erzeugung von Kälte mittels einer Sorptionsmittel-Patrone, welche eine Sorptionsmittel-Füllung (2) aus einem festen Stoff enthält sowie über eine Eintrittsöffnung (5) und eine Austrittsöffnung verfügt, wobei durch die Eintrittsöffnung (5) selektiv Arbeitsmittel eingeführt wird und durch die Absaugöffnung (4) Luft und nicht sorbierbare Gase abgesaugt werden, ohne daß Arbeitsmitteldampf mit abgesaugt wird.

2. Verfahren nach Anspruch 1,
dadurch gekennzeichnet, daß die Sorptionsmittel-Füllung (2) Zeolith vom Typ 3 Å enthält und der Arbeitsmitteldampf kalter Wasserdampf ist.

3. Sorptionsmittel-Patrone zur Kälteerzeugung, mit einer Patronenhülle (1), die eine Sorptionsmittel-Füllung (2) aus einem festen Stoff und eine Eintrittsöffnung (5) und eine Absaugöffnung (4) enthält,
dadurch gekennzeichnet, daß die Absaugöffnung (4) so angeordnet ist, daß sie innerhalb der Eintrittsöffnung (5) aus der Patronenhülle (1) austritt.

4. Sorptionsmittel-Patrone nach Anspruch 3,
dadurch gekennzeichnet, daß die Absaugöffnung (4) durch ein Tauchrohr (16) realisiert ist, welches durch die Eintrittsöffnung (5) in die Sorptionsmittel-Füllung (2) eingeführt wird und mit seinem inneren Ende in den Bereich der Sorptionsmittel-Füllung ragt, von wo die nicht sorbierbaren Gase abgesaugt werden.

5. Sorptionsmittel-Patrone nach einem der Ansprüche 3 bis 4,
dadurch gekennzeichnet, daß die Sorptionsmittel-Füllung Zeolith enthält, welcher Wasserdampf sorbiert.

6. Sorptionsmittel-Patrone nach einem der Ansprüche 3 bis 5,
dadurch gekennzeichnet, daß die Sorptionsmittel-Füllung (2) aus einem kompakten Festkörper besteht, der die komplette Patronenhülle (1) ausfüllt und mit Strömungskanälen (17) durchzogen ist, die von der Eintrittsöffnung in Richtung Absaugöffnung verlaufen.

## Claims

1. Method for producing cold by means of a sorption medium cartridge which contains a filling of sorption medium (2) of a solid substance and has an inlet opening (5) and an outlet opening, whereby working medium is selectively introduced through the inlet opening (5) and air and non-sorbable gases are extracted through the extraction opening (4) without working medium vapour being extracted with them.

2. Method according to claim 1, characterised in that the filling of sorption medium (2) comprises zeolite of type 3A and the working medium vapour is cold water vapour.

3. Sorption medium cartridge for producing cold, with a cartridge casing (1) which comprises a filling of sorption medium (2) of a solid substance and an inlet opening (5) and an extraction opening (4), characterised in that the extraction opening (4) is disposed so that it emerges from the cartridge casing (1) inside the inlet opening (5).

4. Sorption medium cartridge according to claim 3, characterised in that the extraction opening (4) is produced by an immersed pipe (16) which is introduced through the inlet opening (5) into the filling of sorption medium (2) and at its inner end projects into the area of the filling of sorption medium from which the non-sorbable gases are extracted.

5. Sorption medium cartridge according to one of claims 3 to 4, characterised in that the filling of sorption medium comprises zeolite which sorbs water vapour.

6. Sorption medium cartridge according to one of claims 3 to 5, characterised in that the filling of sorption medium (2) consists of a compact solid which fills the complete cartridge casing (1) and has passing through it flow channels (17) which run from the inlet opening in the direction of the extraction opening.

## Revendications

1. Procédé pour produire du froid à l'aide d'une cartouche de sorbant, qui contient une charge de sorbant (2) constituée d'un matériau solide, et qui dispose d'un orifice d'entrée (5) et d'un orifice de sortie, dans lequel un fluide frigorigène est sélectivement introduit par l'orifice d'entrée (5), de l'air et des gaz non-sorbables étant évacués par l'orifice d'aspiration (4), sans entraîner par aspiration de la vapeur de fluide frigorigène.

2. Procédé selon la revendication 1, caractérisé en ce que la charge de sorbant (2) contient une zéolite de type 3, la vapeur de fluide frigorigène étant de la vapeur d'eau froide.

3. Cartouche de sorbant pour produire du froid, comportant une enveloppe de cartouche (1) qui contient une charge de sorbant (2) constituée d'un matériau solide, un orifice d'entrée (5) et un orifice d'évacuation par aspiration (4), caractérisée en ce que l'orifice d'évacuation par aspiration (4) est disposé de façon à sortir de l'enveloppe de cartouche (1) à l'intérieur de l'orifice d'entrée (5).

4. Cartouche de sorbant selon la revendication 3, caractérisée en ce que l'orifice d'évacuation par aspiration (4) est réalisé par un tube plongeur (16), qui est introduit dans la charge de sorbant (2) par l'orifice d'entrée (5) et qui, par son extrémité interne, pénètre dans la zone de la charge de sorbant, d'où sont évacués par aspiration les gaz non-sorbables.

5. Cartouche de sorbant selon l'une des revendications 3 ou 4, caractérisée en ce que la charge de sorbant contient une zéolite, laquelle sorbe la vapeur d'eau.

6. Cartouche de sorbant selon l'une des revendications 3 à 5, caractérisée en ce que la charge de sorbant (2) est constituée d'un matériau solide compact, qui remplit complètement l'enveloppe de cartouche (1) et est traversé par des canaux d'écoulement (17), qui vont de l'orifice d'entrée vers l'orifice d'évacuation par aspiration.
